# EUROPEAN PATENT APPLICATION

(11) **EP 4 677 989 A1**
(43) Date of publication of application: **14.01.2026**
(21) Application number: 24187192.0
(22) Date of filing: 08.07.2024
(51) Int. Cl.: A01D 41/12, A01D 41/127

(54) **SPREADER SYSTEM FOR AN AGRICULTURAL HARVESTER**

(71) Applicant: CNH Industrial Belgium N.V., 8210 Zedelgem (BE)
(72) Inventor: Deruyter, Lucas, 8210 Zedelgem (BE); Jongmans, Dré W.J., 8210 Zedelgem (BE); Leenknegt, Arno, 8210 Zedelgem (BE); Missotten, Bart M.A., 8210 Zedelgem (BE); Tallir, Frederik, 8210 Zedelgem (BE); Vandewalle, Bert, 8210 Zedelgem (BE); Vanlerberghe, Jasper, 8210 Zedelgem (BE); Verschaeve, Bertl, 8210 Zedelgem (BE); Van Overschelde, Pieter, 8210 Zedelgem (BE); Eeckeloo, Stefaan, 8210 Zedelgem (BE); Styns, Steven, 8210 Zedelgem (BE)
(74) Representative: CNH Industrial IP Department

(57) **Abstract**

The spreader system comprises two spreader rotors (10) configured to rotate about upright rotation axes (13) and to eject residue crop material centrally between the spreader rotors in a direction tangential to said spreader rotors. The spreader system further comprises a deflector configuration including a first and second curved deflector blade (20) arranged to deflect crops ejected respectively by the first and second rotor, into respective first and second ejection directions. The deflector blades are pivotable about upright pivot axes, to thereby adjust said ejection directions. The spreader system further comprises a sensing arrangement configured to sense local spreading patterns in a first and second adjustable sensing direction (26), measure the angular positions of the deflector blades (20) by suitable measuring devices (27), and adjust said first and second sensing directions so as to correspond to said first and second ejection directions of the crop residue. The sensing arrangement further comprises a control unit (28) configured to receive signals representative of the local spreading patterns and of the angular positions.

## Description

### Field of the Invention

The present invention is related to agricultural harvesters, such as combine harvesters, and, more specifically to crop residue spreader systems included in such harvesters.

### State of the art.

An agricultural harvester known as a "combine" is historically termed such because it combines multiple harvesting functions within a single harvesting unit, such as picking, threshing, separating and cleaning. During the process of harvesting in a combine, the desired grain is gathered and saved while crop material other than the desired grain is expelled from the combine. The non-grain crop material or crop residue is usually derived from two areas in the combine, the threshing rotor and the cleaning system. The material expelled from the threshing rotor is generally referred to as straw and includes much of the larger plant material such as stalks, stems, cobbs, leaves and the like as well as foreign or non-crop material. The material expelled from the cleaning system is generally referred to as chaff and includes much of the finer plant material residue, such as pods, husk fragments and particulates. The combined flows of crop residue to be expelled from the combine can be dealt with in several ways; however, the processes for redepositing the residue material back into the field can be categorized generally as either windrowing or spreading.

In a windrowing process, the crop residue is deposited onto the harvested crop stubble in a continuous narrow stream or windrow. In a spreading process, the material to be spread is usually chopped to a short length and spread out across a wide deposition area, so that after spreading the material will break down quickly to add nutrients to the soil.

Residue spreaders can be of horizontal and vertical types. A horizontal spreader commonly includes two side-by-side spreader rotors driven on respective upright axes to rotate in opposite directions within a housing. Typically, the spreader system comprises a deflector mechanism comprising curved deflector blades for distributing the residue particles ejected by the rotors across a wide deposition area behind the advancing combine.

Monitoring and control systems have been developed for monitoring the residue spreading pattern and controlling the deflector mechanism in order to thereby maintain optimal distribution of the particles across the deposition area. Sensors applied for this purpose include radar and/or sonar transmitter/receiver systems, configured to transmit electromagnetic or sound waves into a cloud of ejected particles and to detect waves reflected off the particles. Expensive high-quality sensors are required for monitoring the full width of the deposition area, or if lower cost sensors are used, a high number of such sensors is required. Such solutions are therefore costly and/or technically challenging.

### Summary of the invention

The invention is related to a spreader system for a self-propelled agricultural harvester and to a harvester provided with said system, as described in the appended claims. The spreader system of the invention comprises two spreader rotors configured to rotate about upright rotation axes and to eject residue crop material centrally between the spreader rotors in a direction tangential to said spreader rotors. The spreader system further comprises a deflector configuration including a first and second curved deflector blade arranged to deflect crops ejected respectively by the first and second rotor, into respective first and second ejection directions. The deflector blades are pivotable about upright pivot axes, to thereby adjust said ejection directions. According to the invention, the spreader system further comprises a sensing arrangement configured to sense local spreading patterns in a first and second adjustable sensing direction, measure the angular positions of the deflector blades by suitable measuring devices, and adjust said first and second sensing directions so as to correspond to said first and second ejection directions of the crop residue. The sensing arrangement further comprises a control unit configured to receive signals representative of the local spreading patterns and of the angular positions.

The sensing arrangement may include a first and second radar sensor attached respectively to the first and second deflector blade. According to another embodiment, a pair of fixed sensors is combined with mirror plates attached to the deflector blades. A third embodiment includes beamforming radar sensors coupled to the control unit, wherein said control unit adjusts the sensing directions of the beamforming sensors to the ejection direction determined by the angular position of the deflector blades.

The sensing arrangement enables monitoring a spreading pattern produced by the spreader system of the invention when the deflector blades are subjected to a cyclic pivoting movement, i.e. pivoting the blades back and forth about a given angular position. When crops are spread out across a wide deposition area by such cyclic pivoting of the deflector blades, the system enables monitoring said wide deposition area by combined processing of the angular position and spreading data. In this way, a spreading map of the residue within the deposition area can be produced. This enables monitoring a wide deposition area without requiring technically complex and expensive sensor configurations.

### Brief description of the figures

Figure 1 shows a schematic sideview of a combine harvester as known in the art.
Figures 2 to 4 illustrate a deflector configuration known in the art, comprising pivotable deflector blades.
Figures 5 and 6 illustrate a first embodiment of a spreader system according to the invention, wherein radar sensor are attached to the supports onto which the deflector blades are mounted.
Figures 7 to 9 illustrate a second embodiment, wherein fixed radar sensors are combined with movable mirror plates.
Figures 10 and 11 illustrate a third embodiment, wherein beamforming sensor arrays are mounted in relation to each of the deflector blades.

### Detailed description of preferred embodiments of the invention

Preferred embodiments will now be described with reference to the drawings. The detailed description is not limiting the scope of the invention, which is defined only by the appended claims.

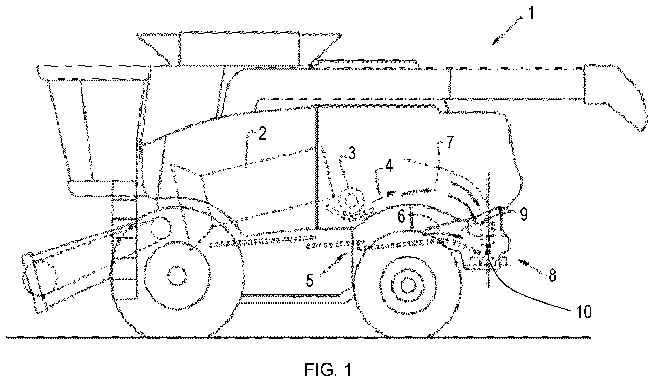

Figure 1 shows a simplified image of an agricultural combine harvester 1 as known in the art. The combine 1 includes a threshing system having a threshing rotor 2 rotatable in a known manner for separating grain-containing material from larger plant residue. A beater 3 is rotatable for directing a stream 4 of said larger residue, also referred to as straw, toward the rear of the combine 1. A cleaning system 5 receives the grain-containing material from the threshing rotor 2 and removes remaining residue such as seedpods, husks and the like, generally referred to as chaff, and directs a flow or stream 6 of chaff toward the rear of the combine 1. The straw 4 and chaff 6 pass through a cavity 7 toward a spreader system 8 at a lower opening 9 of the cavity 7. The spreader system 8 comprises a pair of spreader rotors 10. The system may also comprise a chopper for cutting the straw into small particles before spreading out the particles behind the combine 1 with the help of a deflector. The chopper and the deflector are not shown in Figure 1, which is intended only to generally indicate the location of the spreader system in a combine harvester.

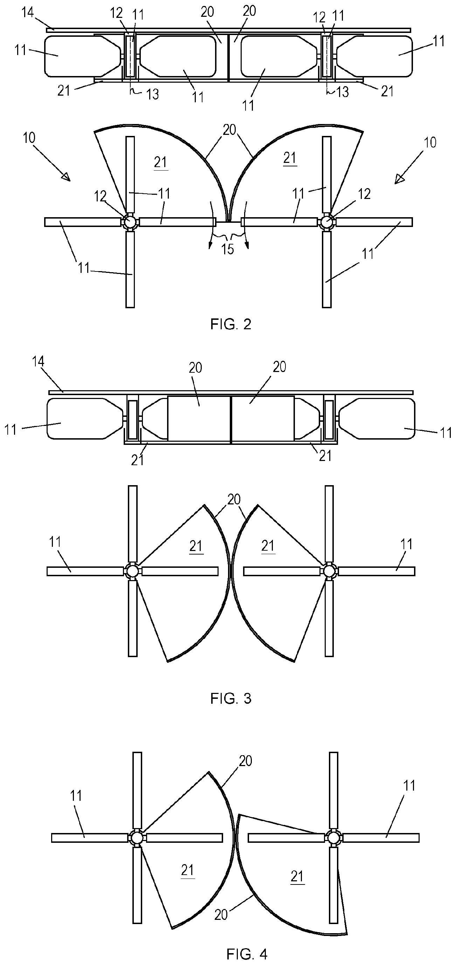

Figures 2 to 4 illustrate the concept of a particular spreader system that is known in the prior art. Front and top views are shown in each of Figures 2 and 3, while Figure 4 shows only a top view. The invention is related to a monitoring system for a deflector configuration of this type, but the configuration itself will first be described before showing embodiments in accordance with the invention. The two adjacent spreader rotors 10 are shown, each comprising four paddles 11 attached to a rotatable shaft 12 (the number of paddles may be different from 4). The rotors are rotatable about respective upright rotation axes 13 relative to a housing 14 which may be fixed to the chassis of a harvester. Only a top portion of the housing 14 is shown in the front views in Figures 2 and 3 while the top views in Figure 2 to 4 show the spreader system with said top portion of the housing removed. The rotors 10 are coupled to a drive system or to separate motors not shown in the drawing but known generally in the art.

The rotation direction of the rotors 10 is indicated by arrows 15 in Figure 2. Crop residue coming from a chopper and/or a cleaning section of the harvester is propelled out of the combine by the rotors 10 through a central area between the rotors and in a direction that is tangential to the circumference of the rotors 10. The residue stream exiting from the area between the rotors 10 can be deflected by curved deflector blades 20 depending on the pivotal position of the blades. The curved surface of the blades is parallel to the rotation axes 13 of the rotors 10, and the blades are pivotable about pivot axes which preferably coincide with said rotation axes 13, as is the case in the illustrated embodiment. The pivot axes of the blades 20 could however be distinct from the rotors' rotation axes, i.e. parallel thereto or even at a small angle relative thereto, as long as the effect of deflecting the crop residue is enabled. The blades 20 are mounted upright on horizontal supports 21 pivotably coupled to respective pivot axles. The supports 21 can be solid plates 21 as shown or lighter bracket-type supports having however the same function as shown, i.e. to support the deflection blades 20 and enable pivoting the blades about the respective pivot axes.

Pivoting the supports 21 and thereby the blades 20 is actuated by dedicated actuators (not shown), configured to pivot the blades 20 independently from the rotation of the rotors 10. This enables positioning the blades 20 at various angular positions about the respective pivot axes, and thereby changing the direction into which residue particles are ejected. In the position shown in Figure 2, the deflector blades 20 have no effect on the ejection trajectory (i.e. particles are ejected in a narrow stream behind the combine), while in the position shown in Figure 3, the blades 20 deflect the particles laterally, i.e. particles are spread out in a wide deposition area. The angular position of the two blades 20 is not necessarily the same. Figure 4 shows a condition wherein the two blades are positioned at different deflection angles. Also, the angular position of the blades 20 is preferably not stationary. It is preferred to pivot the blades 20 back and forth cyclically over a given angular range, to thereby optimize the distribution of ejected particles in a wide deposition area.

It is clear that the angular position and/or the pivotal speed of the deflector blades 20 influences the spreading pattern. As indicated in the introduction, it is known to include a monitoring system that enables measuring the spreading density of ejected particles, and to adjust settings of the deflector configuration on the basis of the measured data to thereby compensate for example for the influence of a sidewind or to adapt the spreading pattern to changing weather conditions. However existing monitoring systems are technically complex and/or expensive.

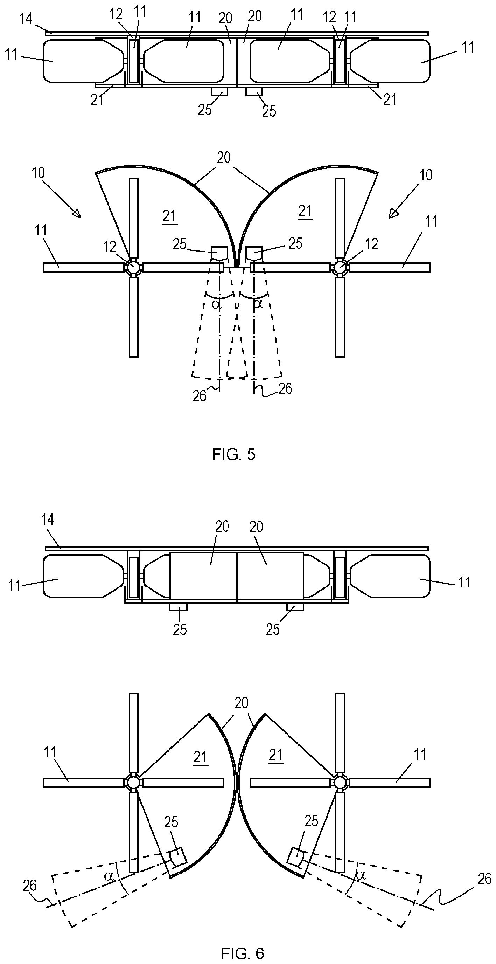

Figures 5 and 6 illustrate a crop residue spreading system provided with a transmitter-receiver arrangement according to a first embodiment of the invention. The spreading system comprises deflector blades 20 mounted on pivotable supports 21, as known from the above-described prior art spreading configuration. In addition, first and second radar sensors 25 are mounted respectively on the underside of the first and second pivotable supports 21. The use of radar technology in an agricultural context is known and applied for detecting (in-flight) the position and speed of ejected crop particles, enabling thereby to derive a spreading pattern in terms of the density of spread-out particles in a given deposition area. To this aim, radar sensors are configured to emit electromagnetic waves, and to receive waves reflected off the particles. The intensity of the detected reflections is translated into data related to the distribution characteristics of the particles. A radar sensor is therefore a device configured to transmit waves and to receive reflections of the transmitted waves. A radar sensor is furthermore configured to emit waves and receive reflected waves in a given angular range, which may be wider or narrower depending on the technical specifications of the sensor. Sensors having a wide angular range are generally more complex.

The sensors 25 applied in the illustrated embodiment have a narrow angular range α of about 20°. According to preferred embodiments, the angular range of the sensors 25 is between 5° and 25°. The sensors are thus configured to sense local spreading patterns, i.e. to detect distribution characteristics of the ejected particles within relatively narrow angular areas originating at the sensor locations. The sensors are oriented in respective sensing directions 26, defined by the center lines 26 of the respective angular ranges α, and the sensors are mounted on the supports 21 so that said sensing directions generally correspond to the directions into which the particles are ejected from the deflector blades 20. In the previous sentence, the wording 'correspond to' is not limited to 'parallel to' but includes sensing directions which are generally oriented in the same way as the ejection directions of the particles. These ejection directions are essentially tangential to the deflector blades 20 at the distal edge of said blades.

The transmitter-receiver arrangement further comprises measurement devices 27 for measuring the angular position of the deflector blades 20. These devices can be known types of devices such as encoders or the like, configured to produce a signal that is representative of the respective angular positions. The devices can be mounted on the pivot axis of the deflector blades as shown, or on a rotation axis of an actuator driving the pivoting of the blades, or in any other suitable way that enables obtaining said angular position-related signals.

The measurement devices 27 and the radar sensors 25 are connected to a control unit 28 in a manner to transmit said signals to the control unit, as symbolized by the dotted lines in Figures 5 and 6. The control unit 28 may be a processing unit of a type as generally known in the art as being included in harvesters for controlling various signals obtained from sensors or other measurement devices, and for processing said signals in order to derive operational data therefrom and/or to produce control signals. The control unit 28 may physically be located remote from the spreader system, for example in or near the operator cabin of the harvester.

As the sensors 25 are attached to the blade supports 21, the sensing directions 26 of the sensors are automatically coupled to the ejection directions of residue particles, as illustrated in Figure 6. The measurement of the angular position of the blades 20 by the devices 27 and the supply of the angular position signals and the spreading signals from the sensors 25 to the control unit 28 furthermore enables data processing that links the angular position of the blades 20 to the spreading pattern. In particular, when the blades 20 are pivoting back and forth cyclically, the spread-out pattern of the particles across the full deposition area can be derived by combining the angular data obtained from the measurement devices with the spreading data obtained from the sensors 25 at sequential instances during one or more pivoting cycles of the blades. This can be done by suitable data processing algorithms applied to the data acquired from the sensors 25 and the measurement devices 27. From the combined processing of the spreading and angular position data, a density map of spread-out residue within the deposition area can be obtained. In this way, deposition characteristics across the full deposition area can be monitored by sensors which are less technically complex compared to a stationary sensor configured to monitor the full width of the deposition area.

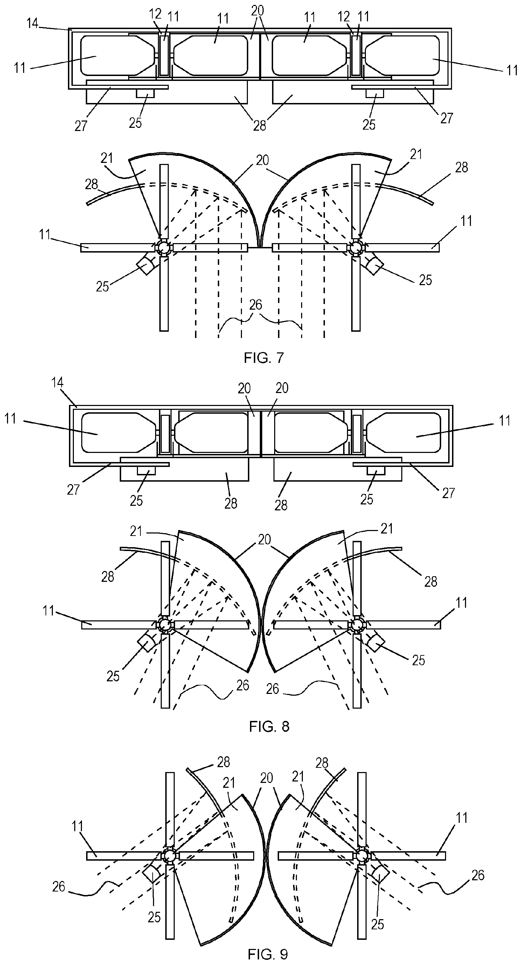

Preferably a single sensor 25 is mounted on each of the supports 21. It is however also possible to mount more than one sensor on one or both of the supports 21. The sensor or sensors 25 are not necessarily mounted on the underside of the supports 21. The sensor(s) 25 could be mounted at other positions fixed relative to the blades 20 which enable the functionality described above,
A second embodiment is illustrated in Figures 7 to 9. In this embodiment, two radar sensors 25 are mounted in fixed positions relative to the housing 14, for example on respective support arms 30 fixed to said housing. The sensors 25 may be of the same type as the sensors used in the first embodiment, i.e. radar sensors configured to emit and receive waves within a relatively narrow angular range of for example 20°. First and second mirror plates 31 are now mounted on the underside of the respective supports 21. The mirror plates 31 may be metal plates having a reflective surface, capable of reflecting electromagnetic waves emitted by the sensors 25. The mirror plates 31 are mounted so that waves emitted by the stationary sensors 25 are reflected off said mirror plates 31. The reflected waves are directed according to a direction determined by the curvature of the mirror plates 31. This curvature together with the position of the mirror plates 31 and of the sensors 25 is configured so that the waves reflected off the mirror plates 31 are directed along a sensing direction 26 that corresponds to the ejection direction of the residue particles, within an applicable pivotal range of said deflector blades 20. This is illustrated in Figures 7 to 9. Again, the wording 'corresponds to' is not limited to 'parallel to'. The sensing direction 26 is indicated in the drawings. The waves reflected off the mirror plates 31 are represented as parallel, but this is merely one possible option which depends on the precise shape and curvature of the mirror plates 31.

Waves reflected off the particles are again reflected off the mirror plates 31 in the opposite propagation direction towards the sensors 25. In this way, the same effect is achieved compared to the first embodiment : at each angular position of the deflector blades 20, a local spreading pattern of the residue particles is detected. Said angular positions are again measured by measurement devices 27 and the resulting signals are supplied to the control unit 28. When the deflector blades 20 pivot back and forth cyclically, the angular and spreading data can be processed by a suitable algorithm to derive spreading characteristics across the full deposition area.

In the illustrated embodiment, the mirror plates 31 extend beyond the supports 21 in order to enable sensing the particle density in a large pivotal range of the deflector blades 20. Depending on the location and type of the sensors 25, it is however also possible to implement mirror plates 31 which are confined to the footprint of the supports 21.

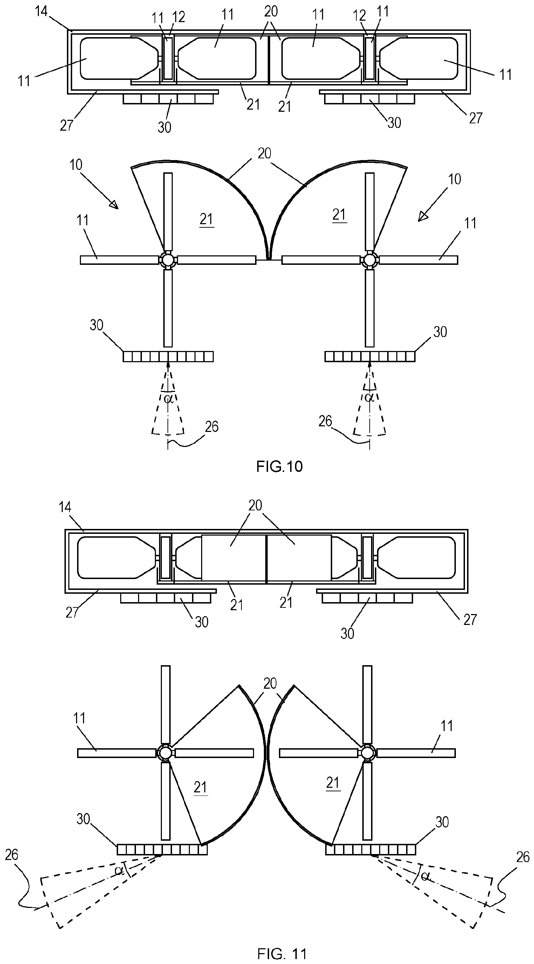

A third embodiment is illustrated in Figures 10 and 11. Now a first and second beamforming radar sensor 35 is fixed to the housing 14, for example mounted on respective support arms 30 extending underneath and near the front of the rotors 10 and deflector blades 20, as shown in the top views. A beamforming radar sensor is known as such : the sensor comprises an array of transmitting antennas, as symbolized by the array-shape of the sensors 35 in the drawings. A phase-shift applied to the antennas results in a combined wave emitted in a controlled sensing direction 26. As in the previous embodiments, the combined emitted wave covers a given angular range α which could be in the same order of magnitude as the angular range of the sensors 25 applied in the first and second embodiment, for example about 20°.

As in the previous embodiments, measurement devices 27 are provided for measuring the angular positions of the deflector blades 20 and supplying related signals to the control unit 28. In this embodiment, the control unit 28 is furthermore configured to direct the combined emitted wave in the ejection direction of the particles at the distal edge of the deflector blades 20. The ejection direction is derived by the control unit from the measured angular positions and the control unit directs the combined wave in said derived direction. This enables monitoring the spreading pattern across the full deposition width, in the same manner as described in relation to the first and second embodiments. The angular range α can be set to be constant by the control unit 28, or said range could be controlled, for example between 5° and 25°, as a function of the detected spreading pattern.

In the illustrated embodiment, the control unit 28 is configured to receive both the angular position-related signals and the spreading-related signals. A beamforming radar sensor however implicitly includes an internal control unit configured to receive command signals related to a desired beam direction, and to control the phase difference between the antennas of the sensor as a function of said command signals. So in the illustrated embodiment, the control unit 28 sends these command signals to the internal control units incorporated in the beamforming sensors 35.

It is however also possible that the angular position-related signals generated by the measuring devices 27 are directly transmitted to the internal control units of the beamforming sensors 35 which then command said sensors to produce a beam in the corresponding beam direction. The external control unit 28 then also receives the angular position-related signals from the measuring devices 27 and the spreading-related signals from both beamforming sensors 35, and combines these signals in the manner described above in relation to the first and second embodiments.

In any embodiment according to the invention, the control unit 28 is configured to determine a spreading pattern in a deposition area obtained by a back-and-forth movement of the deflector blades 20. Preferably, the control unit 28 is furthermore configured to control operational parameters of the spreading system on the basis of the determined pattern, in accordance with a control algorithm programmed in the control unit 28. In particular, operational parameters of one or both of the rotors 10 and/or of one or both of the deflector blades 20 could be controlled. For example, if the pattern is more dense on one side of the harvester due to a sidewind, the control unit may send command signals to the actuators arranged to pivot the deflector blades, aimed for example at changing the pivotal speed and/or the angular range of the cyclic movement of one of the deflector blades, so that a more even distribution is obtained on the side that is most affected by the sidewind. In addition or separately, the rotational speed of one of the rotors 10 could be increased or decreased as a function of the detected pattern.

## Claims

1. A crop residue spreader system for use in a self-propelled agricultural harvester (1), for spreading crop residue in an area behind the advancing harvester, the system comprising :
- a housing (14),
- a first and second spreader rotor (10) configured to rotate relative to the housing about upright rotation axes (13) so as to eject crop residue in a central area between the spreader rotors,
- a deflector mechanism comprising a first and second curved deflector blade (20) arranged to deflect crop residue ejected respectively by said first and second spreader rotor (10), wherein the deflector blades are pivotable about respective upright pivot axes, to thereby adjust respective first and second angular positions of the first and second deflector blade (20), said first and second angular positions determining respective first and second ejection directions of crop residue deflected respectively by the first and second deflector blades (20),
- a radar-based transmitter/receiver arrangement for sensing a spreading pattern of said crop residue, and comprising a control unit (28) configured to receive and process signals representative of said spreading pattern,
**characterized in that** :
- the transmitter/receiver arrangement further comprises measurement devices (27) for measuring said first and second angular positions of the first and second deflector blades (20),
- the control unit (28) is configured to receive and process signals representative of said angular positions,
- the transmitter/receiver arrangement is configured to :
∘ sense local spreading patterns in a first and second adjustable sensing direction (26),
∘ adjust said first and second sensing directions (26) so as to correspond to said first and second ejection directions of the crop residue,
∘ process signals representative of said local spreading patterns and of said angular positions in a manner enabling to obtain a spreading pattern in a deposition area, when the deflector blades are pivoted back and forth cyclically.

2. The spreader system according to claim 1, wherein the transmitter/receiver arrangement comprises a first and second radar sensor (25) mounted in fixed positions relative respectively to said first and second deflector blade (20).

3. The spreader system according to claim 2, wherein the first and second deflector blades (20) are mounted upright on a respective first and second pivotable support (21), and wherein the first and second radar sensor (25) are mounted on the underside of the respective first and second pivotable support (21).

4. The spreader system according to claim 1, wherein :
- the transmitter/receiver arrangement comprises a first and second radar sensor (25) mounted in fixed positions relative to the housing (14),
- first and second mirror plates (31) are mounted in fixed positions relative respectively to the first and second deflector blades (20), and
- the first and second radar sensors (25) are positioned and the first and second mirror plates (31) are shaped and positioned in such a way that:
∘ within a given range of the pivotal position of the deflector blades (20), waves emitted by the first and second sensor (25) are reflected by the respective first and second mirror plate (31), thereby producing first and second mirror-reflected waves,
∘ said first and second mirror-reflected waves propagate respectively into said first and second sensing directions (26).

5. The spreader system according to claim 4, wherein the first and second deflector blades (20) are mounted upright on a respective first and second pivotable support (21), and wherein the first and second mirror plates (31) are mounted on the underside of the respective first and second pivotable support (21).

6. The spreader system according to claim 1, wherein :
- the transmitter/receiver arrangement comprises a first and second beamforming radar sensor (35) mounted in fixed positions relative to the housing (14), and wherein the control unit (28) is configured to control a direction of first and second combined waves emitted respectively by the first and second beamforming radar sensor (35),
- the control unit (28) is further configured to direct the first and second combined waves into said first and second sensing directions (26) corresponding respectively to said first and second ejection directions.

7. The spreader system according to claim 6, wherein the control unit (28) is furthermore configured to control first and second angular ranges (α) defining said respective first and second local spreading patterns.

8. The spreader system according to any one of the preceding claims, wherein the control unit (28) is configured to control operational parameters of one or both of the spreader rotors (10) and/or of one or both of the deflector blades (20) as a function of said spreading pattern in said deposition area.

9. An agricultural harvester comprising a crop residue spreader system according to any one of the preceding claims.

10. A method for monitoring a spreading pattern of crop residue particles spread out by a spreading system according to any one of claims 1 to 7, the method comprising the steps of :
- pivoting the first and second deflector blades (20) back and forth cyclically to thereby spread out the particles in a deposition area,
- measuring the angular position of the deflector blades (20) at sequential instances during one or more cycles of said pivoting of the deflector blades,
- at said sequential angular positions, sensing said local spreading patterns,
- combining the sensed spreading patterns with the measured angular positions to obtain a spreading pattern in the deposition area.

11. The method according to claim 10, further comprising controlling operational parameters of one or both of the spreader rotors (10) and/or of one or both of the deflector blades (20) as a function of said spreading pattern in said deposition area.

12. The method according to claim 10, further comprising calculating a density map of spread-out residue based on the sensed spreading patterns and measured corresponding positions with GPS.
